# EUROPÄISCHE PATENTSCHRIFT

(11) **EP 0 494 143 B1**
(45) Veröffentlichungstag und Bekanntmachung des Hinweises auf die Patenterteilung: **27.07.1994**
(21) Anmeldenummer: 90908474.1
(22) Anmeldetag: 31.05.1990
(51) Int. Cl.: G01P 15/12, G01P 15/125

(54) **VORRICHTUNG ZUR MESSUNG MECHANISCHER KRÄFTE UND KRAFTWIRKUNGEN**
DEVICE FOR MEASURING MECHANICAL FORCES AND DYNAMIC EFFECTS
DISPOSITIF POUR MESURER DES FORCES MECANIQUES ET DES EFFETS DYNAMIQUES

(30) Priorität: 23.06.1989 DE 3920645
(43) Veröffentlichungstag der Anmeldung: 15.07.1992
(73) Patentinhaber: FRAUNHOFER-GESELLSCHAFT ZUR FÖRDERUNG DER ANGEWANDTEN FORSCHUNG E.V., 80636 München (DE)
(72) Erfinder: WAGNER, Bernhard, D-1000 Berlin 38 (DE); BENECKE, Wolfgang, D-1000 Berlin 30 (DE); RIETHMÜLLER, Werner, D-1000 Berlin 21 (DE); SCHNAKENBERG, Uwe, D-1000 Berlin 21 (DE)
(86) Internationale Anmeldenummer: DE9000412
(87) Internationale Veröffentlichungsnummer: WO9100522

(56) Entgegenhaltungen:
- WO-A-87/05704
- US-A- 4 653 326
- US-A- 4 882 933

## Beschreibung

### Technisches Gebiet

Die Erfindung betrifft eine Vorrichtung zur Messung mechanischer Kräfte und Kraftwirkungen, die mittels mikromechanischer Prozesse herstellbar ist, mit einem Grundkörper, einem Rückstellelement und einer beweglichen Masse, und mit Elementen zur Begrenzung der Auslenkung der beweglichen Masse. Unter dem Einfluß einer mechanischen Kraft wird die bewegliche Masse gegen den Widerstand des Rückstellelementes ausgelenkt. Die mechanischen Elemente einer solchen Vorrichtung werden mit den in der Mikrostrukturtechnik üblichen isotropen und anisotropen Ätzverfahren gefertigt, die elektronischen Elemente zur Meßwerterfassung mit den Fertigungsprozessen der Mikroelektronik. Mit Hilfe von Sensoren werden die mechanischen Wirkungen einer Kraft in elektrische Signale umgewandelt und einer Auswerteschaltung zugeführt.

### Stand der Technik

Solche Vorrichtungen, die beispielsweise zur Messung von Beschleunigungen eingesetzt werden sind beschrieben von Davison, J. L. und Kerns, D. V., in: "Silicon Acceleration Technology"` Proceedings of the 1986 International Conference on Industrial Electronics, Control and Instrumentation, IEEE, New York 1986, S. 218-222.

Bei der Herstellung von Vorrichtungen zur Messung von Kräften und Kraftwirkungen müssen neben den anwendungsspezifischen Eigenschaften auch Anforderungen aus dem allgemeinen Einsatzfeld der Vorrichtung Berücksichtigung finden. Zu diesen Anforderungen zählt die Unempfindlichkeit gegenüber mechanischer Überbeanspruchung. Beispielsweise muß ein Mikro-Gravitationsmesser für Satelliten oder Raumstationen Beschleunigungen aushalten, die um Größenordnungen über seinem eigentlichen Meßbereich liegen.

Bei allen bisher bekannten Lösungen wird der Überlastschutz durch mechanische Anschläge erreicht, die die Auslenkung der beweglichen Masse einer Vorrichtung zur Messung von Beschleunigungen auf maximale Werte begrenzen.

Bei monolithisch integrierten Vorrichtungen, die aus einem einzigen Halbleiterchip gefertigt sind, werden solche Elemente zur Begrenzung der Auslenkung der beweglichen Masse beispielsweise durch Aufbringen zusätzlicher Schichten hergestellt. Hierfür muß wenigstens eine zweite Halbleiter- oder Glasscheibe durch Klebetechnik oder Fügetechnik mit der monolithisch integrierten Vorrichtung verbunden werden. Das bedeutet, daß zur Herstellung der Anschläge zusätzliche, in den Prozeßschritten der monolithischen Integration nicht vorgesehene Arbeitsschritte ausgeführt werden müssen. Darüber hinaus sind gefügte Vorrichtungen mit zusätzlichen Fehlerquellen behaftet.

In der Offenlegungsschrift DE 36 11 360 und der Patentschrift US 46 99 006 sind Vorrichtungen beschrieben, bei welchen aus Halbleiterkristallen Drehpendel herausgeätzt sind. Bei diesen Vorrichtungen wird ein mechanischer Anschlag dadurch ausgebildet, daß das Substrat unterhalb der Drehpendel nicht vollständig entfernt wird, sondern Gruben herausgeätzt werden. Der Grubenboden dient als mechanischer Anschlag bei der Auslenkung der Drehpendel.

Allerdings eignet sich diese Art der mechanischen Begrenzung nicht für Anwendungsfälle, in denen der Ausschlag auf sehr kleine Werte begrenzt werden muß, da zur vollständigen Unterätzung der Drehpendel eine Mindesttiefe der Ätzgrube erforderlich ist.

Aus der Patentschrift US 46 53 326 ist eine mikromechanische Vorrichtung zur Messung von Beschleunigungen bekannt, die einen Biegebalken aufweist, der Deformationen in der Substratebene ausführen kann. Der Biegebalken wird durch Freiätzen aus dem Substrat erzeugt. Um eine Auslenkung parallel zur Substratoberfläche zu erreichen muß das Substrat durchgängig entfernt werden.

Die verbleibenden begrenzenden Schenkel des Substrates bilden mechanische Begrenzungen für die Auslenkung des Biegebalkens in der Substratebene. Insbesondere wenn wie in der US 46 53 326 die Schenkelflächen als Kondensatorplatten ausgebildet werden sollen, eignet sie sich nicht ohne weiteres zur Begrenzung auf sehr kleine Auslenkungen.

### Darstellung der Erfindung

Der Erfindung liegt die Aufgabe zugrunde, eine Vorrichtung zur Messung von mechanischen Kräften und Kraftwirkungen mit einem mechanischen Überlastschutz bereitzustellen, der besonders einfach den geforderten Einsatzbedingungen angepaßt hergestellt werden kann und die sich durch einen möglichst einfachen Herstellungsprozeß auszeichnet.

Diese Aufgabe wird dadurch gelöst, daß die Elemente zur Begrenzung der Auslenkung aus wenigstens zwei parallel angeordneten Zungen und einem senkrecht zu den Zungen verlaufenden Steg besteht, wobei das feste Ende der ersten Zunge mit dem Rückstellelement oder der beweglichen Masse und das feste Ende der zweiten Zunge mit dem festen Grundkörper verbunden ist, und der Steg mit einer Zunge fest verbunden ist, und die andere Zunge teilweise überdeckt, und daß für die Begrenzung der Auslenkung der beweglichen Masse in jede der beiden Bewegungsrichtungen wenigstens ein Element vorgesehen ist.

Das Rückstellelement kann nur so weit ausgelenkt werden, bis die zweite Zunge gegen den Steg der ersten Zunge stößt und damit die Auslenkung begrenzt. Die Größe der zugelassenen Auslenkung wird durch den Abstand zwischen dem Steg und der Zungenoberfläche und durch den Abstand des Elementes vom Aufhängepunkt des Rückstellelementes bestimmt. Für jede Richtung der Auslenkung ist wenigstens ein Element zur Begrenzung vorgesehen.

Vorteilhafte Ausbildungen der Erfindung sind in den Unteransprüchen gekennzeichnet.

In Anspruch 2 ist eine Ausführungsform der Erfindung gekennzeichnet, die sich besonders einfach mit den Prozessen der Mikrostrukturtechnik herstellen läßt. Diese Ausführungsform dient zur Messung von Beschleunigungen. Die Begrenzung der Auslenkung erfolgt durch Systeme ineinanderfassender Zungen, wobei jeweils ein Teil der Zungen am festen Grundkörper und ein zweiter Teil der Zungen an dem beweglichen, als Biegebalken ausgebildeten Rückstellelement angebracht ist.

Jeweils benachbarte Zungen des einen Typs werden durch freitragende Brückenelemente, die in einem bestimmten Abstand zur Oberfläche ausgebildet sind, verbunden. Die Brücken müssen nicht notwendig durchgehend sein, es genügt, wenn sie die benachbarten Zungen des anderen Typs teilweise überlappen. Der Abstand der Brücken von der ursprünglichen Substratoberfläche und der Abstand der Systeme von Zungen vom Aufhängepunkt des Rückstellelementes bestimmen den maximalen Bewegungshub der beweglichen Masse. Durch Aufbau der bewegungsbegrenzenden Brücken auf die an dem festen Grundkörper angebrachten Zungen des einen Systems und auf die an dem Rückstellelement angebrachten Zungen des anderen Systems, läßt sich eine bidirektionale Bewegungsbegrenzung erreichen.

Die Messung der Kraft, die zur Deformation des Rückstellelementes führt, erfolgt nach Anspruch 3 mit Hilfe eines integrierten Dehnungsmeßstreifens. Dadurch wird erreicht, daß die elektrischen Kontakte der Vorrichtung in der Prozeßebene liegen und dadurch mit Hilfe einfacher Leiterbahnen mit einem Auswerteschaltkreis verbunden werden können.

Nach Anspruch 4 kann die Kraft auch kapazitiv über Abstandsänderung sich gegenüberliegender Platten gemessen werden, wenn eine Platte mit dem Grundkörper und die zweite Platte mit einen beweglichen Teil der Vorrichtung verbunden ist.

Diese beiden Methoden zur Messung der Kraft stellen keine Beschränkung dar, sondern Möglichkeiten, die besonders einfach mit Hilfe der Mikromechanik realisierbar sind. Selbstverständlich können auch andere Methoden und physikalische Effekte (z. B. piezoelektrischer Effekt, ferroelektrischer Effekt, magnetische Methoden) zur Bestimmung der Kraft eingesetzt werden.

In Anspruch 5 ist eine Ausführungsform beschrieben, die aus in der Mikromechanik bze. der Mikroelektronik üblichen Materialien besteht.

Ein besonders effektives Verfahren zur Herstellung einer erfindungsgemäßen Vorrichtung ist die monolithische Integration der Elemente zur Begrenzung der Anslenkung der trägen Masse bzw. des Biegebalkens zusammen mit den anderen Elementen der Vorrichtung in derselben Prozeßebene, wie in Anspruch 6 angegeben ist.

Ein Verfahren zur Herstellung einer Vorrichtung mit den in der Mikromechanik zur Anwendung gelangenden Prozeßschritten ist in den Ansprüchen 7 und 8 gekennzeichnet. Die freitragenden Brückenstrukturen werden danach durch Aufbringen (vorzugsweise Aufdampfen) einer Metallschicht und anschließender galvanischer Verstärkung dieser Metallschicht hergestellt. Als Metall wird vorzugsweise Gold verwendet. Die freitragenden Brückenstrukturen können aber auch aus Silizium oder einer Siliziumverbindung hergestellt werden.

Die mit der Erfindung erzielten Vorteil bestehen insbesondere darin, daß die Vorrichtung einen Überlastschutz für großen Kräfte aufweist, und daß der Überlastschutz zusammen mit den anderen Elementen der Vorrichtung in einem Grundkörper monolithisch integriert ist. Dadurch werden zusätzliche Maßnahmen zum Anbringen eines Elementes zur Begrenzung der Auslenkung überflüssig. Insbesondere kann das Anbringen einer zweiten und dritten Halbleiter- oder Glasschicht durch eine Fügetechnik vermieden werden. Die erfindungsgemäße Vorrichtung zeichnet sich deshalb durch einen besonders einfachen Herstellungsprozeß und große Haltbarkeit aus.

Da alle Elemente, auch die elektrischen Kontakte in einer Oberfläche integriert sind, eignet sich die Vorrichtung besonders zur gemeinsamen Integration der mikromechanischen Elemente und des Auswerteschaltkreises auf einem Chip. Durch die Variation des Abstandes der freitragenden Brücken von der Oberfläche und der Entfernung der Elemente zur Begrenzung der Auslenkung vom Aufhängepunkt des Rückstellelementes kann für verschiedene Anwendungszwecke ein unterschiedlicher Überlastschutz erreicht werden.

Eine erfindungsgemäße Vorrichtung, die als Beschleunigungsmesser ausgestaltet ist, eignet sich für den Einsatz im Land- und Flugverkehr, in der Raumfahrt sowie zur Bauteilepositionierung in der Robotik.

Mit einer weiteren Ausgestaltung der erfindungsgemäßen Vorrichtung können Drücke und Druckdifferenzen (z. B. Höhenmessung) oder auch Strömungsgeschwindigkeiten von Flüssigkeiten bestimmt werden.

### Kurze Beschreibung der Zeichnungen

Ein Ausführungsbeispiel wird im folgenden unter Bezugnahme auf die Zeichnungen näher beschrieben.

Es zeigen:
- Fig. 1: eine erfindungsgemäße Vorrichtung in Aufsicht,
- Fig. 2: eine Brückenstruktur im Querschnitt (Schnittlinie A B),
- Fig. 3: ein Verfahren zur Herstellung einer Brückenstruktur.

### Weg zur Ausführung der Erfindung

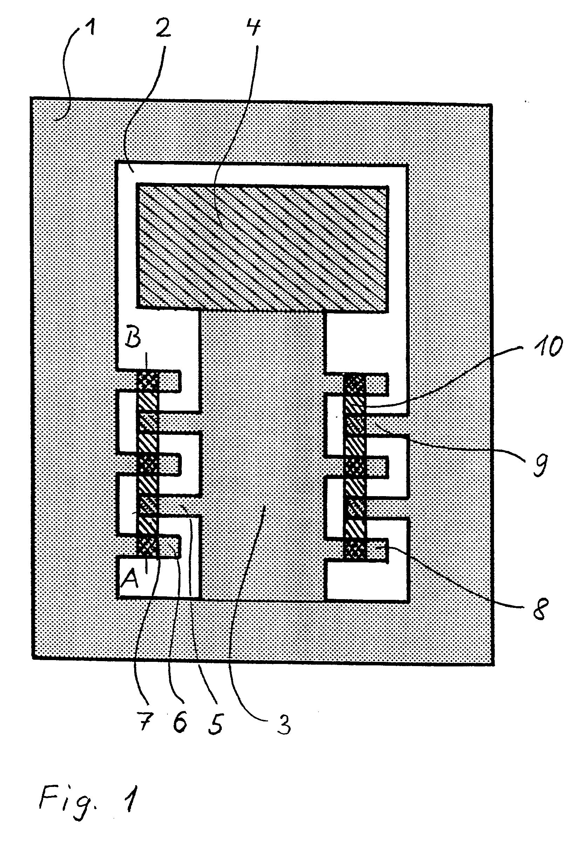

Die Vorrichtung in Fig. 1 dient zur Messung von Beschleunigungen und besteht aus einem quaderförmigen Grundkörper 1, der aus einem Siliziumwafer mit einer Dicke von etwa 500 µm herausgearbeitet ist. Typische Ausmaße des Grundkörpers sind 500 mal 300 Mikrometer. Der Grundkörper hat eine Vertiefung mit einem an der Oberfläche rechteckigen Querschnitt. An einer Schmalseite weist der Grundkörper einen Biegebalken 3 (mit einer Dicke zwischen einem und einhundert Mikrometern) auf, der an seinem losen Ende eine Masse 4 trägt. Aus einer Längsseite des Biegebalkens 3 ragen senkrecht zwei Zungen 5 heraus, denen drei fest mit dem Grundkörper 1 verbundene Zungen 6 so zugeordnet sind, daß sie eine Reihe parallel zueinander angeordneter ineinandergreifender Zungen bilden. Die drei fest mit dem Grundkörper verbundenen Zungen 6 sind über eine freitragende Brücke 7, die die beiden anderen Zungen überspannt, miteinander verbunden. Auf der anderen Längsseite des Biegebalkens sind drei Zungen 8 angebracht, die mit zwei, mit dem Grundkörper verbundenen Zungen 9, ebenfalls eine Reihe ineinandergreifender Zungen bilden. Die drei mit dem Biegebalken verbundenen Zungen 8 sind in analoger Weise durch eine freitragende Brücke 10 miteinander verbunden. Die Dicke der Zungen entspricht der des Biegebalkens und die Brücken sind einige zehn Mikrometer dick.

Bei einer Auslenkung nach oben stellt die Brücke 7 einen Anschlag für die beiden Zungen 5 des Biegebalkens dar, bei einer Auslenkung nach unten, die Brücke 10 für die beiden fest mit dem Grundkörper verbundenen Zungen 9.

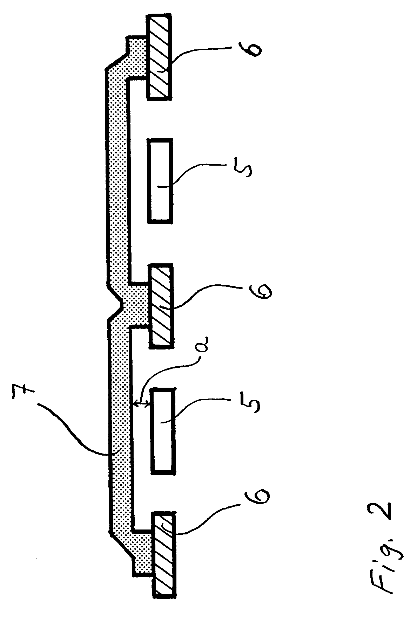

Die Figur 2 zeigt den Querschnitt durch ein System von Zungen entlang der Schnittlinie A B. Die Brücke 7, die von den fest mit dem Grundkörper verbundenen Zungen 6 getragen wird, überspannt die mit dem Biegebalken 3 verbundenen Zungen 5 in einem Abstand a. Der vorgebbare Abstand a bestimmt die maximale Amplitude der Auslenkung der Zungen 5 relativ zu den Zungen 6 in Richtung der Brücke.

Ein analoges Bild ergibt sich für das zweite Zungensystem. In diesem Fall ist jedoch die Brücke 10 auf die drei Zungen 8 gestützt, die mit dem Biegebalken 3 verbunden sind. Die Brücke 10 führt demnach die Bewegung des Biegebalkens mit aus. Bei einer Auslenkung des Biegebalkens 3 nach unten stellen die Zungen 9 einen Anschlag für die Brücke 10 dar.

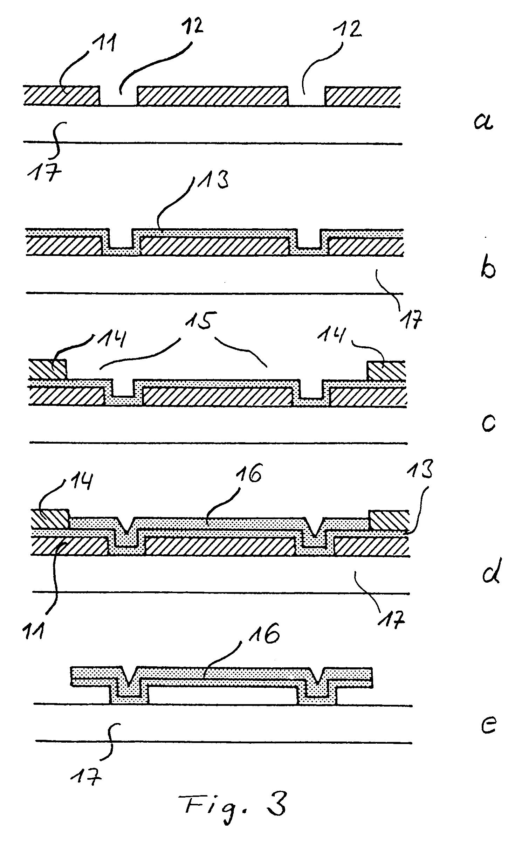

Die Prozeßschritte zur Herstellung der freitragenden Brücken 7 und 10 sind in Figur 3 dargestellt. Zunächst werden die mechanischen Elemente des Beschleunigungsmessers beispielsweise durch lokale Hoch-Bor-Dotierung definiert. Die Zungenstrukturen werden gleichzeitig mit dem Biegebalken erzeugt. Zusätzliche Prozeßschritte sind nur für die freitragende Brückenstruktur erforderlich.
a) Zur Ausbildung der Brücken wird auf die Oberfläche des Substrats 17 eine erste Photoresistschicht 11 aufgebracht. Die Dicke dieser Schicht, die zwischen einem und einhundert Mikrometern betragen kann, bestimmt den späteren Abstand a der freitragenden Brücke von der Oberfläche der Zunge. In den Bereichen 12 der Zungen, die die Brücke tragen, wird die Photoresistschicht 11 partiell entfernt.
b) Auf die Photoresistschicht 11 und die freigelegten Bereiche 12 wird eine Galvanik-Startschicht 13 aufgebracht. Vorzugsweise wird eine ca. 100 nm dicke Goldschicht aufgedampft.
c) Die Oberfläche wird mit einer zweiten Photoresistschicht 14 überzogen, die im Bereich 15 der auszubildenden Brücken entfernt wird.
d) Die Galvanik-Startschicht 13 wird galvanisch verstärkt, bis die gewünschte Dicke der Brückenstruktur 16 von einigen zehn Mikrometern erreicht ist.
e) Durch Entfernen der ersten Photoresistschicht 11, der Galvanik-Startschicht 13 und der zweiten Photoresistschicht 14 entsteht eine freitragende Brückenstruktur.

Die Schichtdicken sind in der Zeichnung zur Veranschaulichung nicht maßstabgetreu wiedergegeben. Für die Brückenstrukturen sind auch andere Materialien, z. B. auf der Basis von polykristallinem Silizium, einsetzbar.

## Patentansprüche

1. Vorrichtung zur Messung mechanischer Kräfte und Kraftwirkungen, die mittels mikromechanischer Prozesse herstellbar ist, mit einem Grundkörper, einem Rückstellelement und einer beweglichen Masse, und mit Elementen zur Begrenzung der Auslenkung der beweglichen Masse, **dadurch gekennzeichnet**, daß ein Element zur Begrenzung der Auslenkung aus wenigstens zwei parallel angeordneten Zungen und einem senkrecht zu den Zungen verlaufenden Steg besteht, wobei das feste Ende der ersten Zunge mit dem Rückstellelement oder der beweglichen Masse und das feste Ende der zweiten Zunge mit dem festen Grundkörper verbunden ist, und der Steg mit einer Zunge fest verbunden ist, und die andere Zunge teilweise überdeckt, und daß für die Begrenzung der Auslenkung der beweglichen Masse in jede der beiden Bewegungsrichtungen wenigstens ein Element vorgesehen ist.

2. Vorrichtung nach Anspruch 1, **dadurch gekennzeichnet**, daß der Grundkörper quaderförmig ist und eine Vertiefung mit einer in der Prozeßebene rechteckigen Querschnittsfläche aufweist, daß das Rückstellelement als ein einseitig fest mit dem Grundkörper verbundener Biegebalken ausgebildet ist, dessen freies Ende die Masse trägt, und daß entlang des Biegebalkens zwei Reihen von Elementen zur Begrenzung der Auslenkung so angeordnet sind, daß die mit dem festen Grundkörper verbundenen Zungen und die mit dem Biegebalken verbundenen Zungen kammartig ineinandergreifen, und daß die mit dem festen Grundkörper verbundenen Zungen der einen Reihe und die mit dem Biegebalken verbundenen Zungen der zweiten Reihe jeweils durch freitragende Brückenelemente verbunden ist, die die dazwischenliegenden Zungen in einem vorgebbaren Abstand überspannen.

3. Vorrichtung nach einem der Ansprüche 1 oder 2, **dadurch gekennzeichnet,** daß die durch Krafteinwirkung bedingte Deformatione des Rückstellelementes mittels integrierter Dehnungsmeßstreifen bestimmt wird.

4. Vorrichtung nach einem der Ansprüfche 1 bis 3, **dadurch gekennzeichnet**, daß an fest mit dem Grundkörper verbundenen und an beweglichen Teilen der Vorrichtung sich gegenüberliegende Platten angebracht sind, die einen Kondensator mit variablem Plattenabstand bilden, und daß die einwirkende Kraft durch Bestimmung der Kapazitätsänderung gemessen wird.

5. Vorrichtung nach einem der Ansprüche 1 bis 4, **dadurch gekennzeichnet**, daß der Grundkörper, das Rückstellelement und die Zungen aus Silizium bzw. einer Siliziumverbindung und die Brücken zur Verbindung der Zungen aus einem Metall oder Silizium oder einer Siliziumverbindung bestehen.

6. Vorrichtung nach einem der Ansprüche 1 bis 5, **dadurch gekennzeichnet**, daß die Elemente zur Begrenzung der Auslenkung der trägen Masse zusammen mit den anderen Elmenten der Vorrichtung monolithisch in der durch die mirkomechanischen Prozesse definierten Prozeßebene integriert sind.

7. Verfahren zur Herstellung einer Vorrichtung nach einem der Ansprüche 2 bis 6, bei dem in an sich bekannter Weise mit Hilfe von isotropen und anisotropen Ätzverfahren und mit Lithographieschritten die mechanischen Elemente und mit Hilfe von Verfahren aus der Mikroelektronik die elektronischen Elemente zur Meßwerterfassung prozessiert werden, **dadurch gekennzeichnet**, daß die freitragenden Brückenstrukturen mittels lokaler Gold-Galvanik und einer Zweilagen-Photoresisttechnik hergestellt werden.

8. Verfahren nach Anspruch 7, **dadurch gekennzeichnet**, daß zur Herstellung der Brückenstrukturen folgende Prozeßschritte herangezogen werden:
- auf die Oberfläche des Beschleunigungsmessers wird eine Photoresistschicht aufgebracht;
- in den Bereichen, in den die Brücke fest mit der Oberfläche verbunden werden soll, wird die Photoresistschicht entfernt;
- auf die Oberfläche des Beschleunigungsmessers wird eine dünne Galvano-Startschicht aufgetragen;
- mit Hilfe einer zweiten Photoresistschicht und einem Lithographieschritt wird die Struktur der Brückenelemente definiert;
- die Galvano-Startschicht wird lokal galvanisch verstärkt;
- die zweite Photoresistschicht wird entfernt;
- die Galvano-Startschicht wird in den nicht verstärkten Bereichen entfernt;
- die erste Photoresistschicht wird entfernt.

## Claims

1. Device for the measurement of mechanical forces and dynamic effects, which can be produced by means of micromechanical processes, with a main body, a return element and a moving mass, and with elements for limiting deflection of the moving mass, characterised in that an element for limiting deflection consists of two or more parallel tongues and a web extending perpendicularly to the tongues, wherein the fixed end of the first tongue is connected to the return element or the moving mass and the fixed end of the second tongue is connected to the fixed main body, and the web is rigidly connected to one tongue and partially overlaps the other tongue, and in that at least one element is provided for limiting deflection of the moving mass in each of the two directions of movement.

2. Device according to claim 1, characterised in that the main body is cuboid and comprises an indentation with a cross-sectional area which is rectangular in the process plane, in that the return element is constructed as a bending beam which is rigidly connected to the main body at one end and of which the free end carries the mass, and in that two rows of elements for limiting deflection are arranged along the bending beam in such a way that the tongues connected to the fixed main body and the tongues connected to the bending beam interlock in comb-like fashion, and in that the tongues of one row connected to the fixed main body and the tongues of the second row connected to the bending beam are connected in each case by cantilever bridge elements which span the tongues located therebetween at a predetermined distance.

3. Device according to either of claims 1 or 2, characterised in that the deformation of the return element caused by dynamic action is determined by means of integrated wire strain gauges.

4. Device according to any of claims 1 to 3, characterised in that on parts of the device rigidly connected to the main body and on moving parts of the device are mounted opposed plates which form a capacitor with variable plate spacing, and in that the operating force is measured by determining the variation in capacitance.

5. Device according to any of claims 1 to 4, characterised in that the main body, the return element and the tongues are made of silicon or a silicon compound, and the bridges for connecting the tongues are made of a metal or silicon or a silicon compound.

6. Device according to any of claims 1 to 5, characterised in that the elements for limiting deflection of the inert mass together with the other elements of the device are integrated monolithically in the process plane defined by the micromechanical processes.

7. Method for the production of a device according to any of claims 2 to 6, in which in a manner known in the art the mechanical components are processed by isotropic and anisotropic etching methods and with lithography steps, and the electronic components for the detection of measured quantities are processed by methods from microelectronics, characterised in that the cantilever bridge structures are produced by local gold plating and a two-layer photoresist technique.

8. Method according to claim 7, characterised in that to produce the bridge structures, the following process steps are used:
- a photoresist layer is applied to the surface of the accelerometer;
- in the regions in which the bridge is to be rigidly connected to the surface, the photoresist layer is removed;
- a thin plating initiating layer is applied to the surface of the accelerometer;
- by means of a second photoresist layer and a lithography step, the structure of the bridge elements is defined;
- the plating initiating layer is thickened locally by plating;
- the second photoresist layer is removed;
- the plating initiating layer is removed in the unthickened regions;
- the first photoresist layer is removed.

## Revendications

1. Dispositif pour mesurer des forces mécaniques et des effets dynamiques, qui peut être réalisé au moyen de processus micromécaniques, avec un corps de base, un élément de rappel et une masse mobile, et avec des éléments pour limiter la déflexion de la masse mobile, **caractérisé** en ce qu'un élément pour limiter la déflexion est constitué d'au moins deux languettes disposées en parallèle et d'une entretoise s'étendant perpendiculairement aux languettes, l'extrémité fixe de la première languette étant reliée à l'élément de rappel ou à la masse mobile et l'extrémité fixe de la seconde languette étant reliée au corps de base fixe, et l'entretoise étant reliée fixement à une languette et recouvrant partiellement l'autre languette, et en ce qu'au moins un élément est prévu pour limiter la déflexion de la masse mobile dans chacune des deux directions de déplacement.

2. Dispositif selon la revendication 1, **caractérisé** en ce que le corps de base est parallélépipèdique et présente un renfoncement de section à surface rectangulaire dans le plan de traitement, en ce que l'élément de rappel est réalisé sous la forme d'une barre de flexion, fixement reliée par un côté au corps de base et dont l'extrémité libre porte la masse, et en ce que deux rangées d'éléments pour limiter la déflexion sont disposées le long de la barre de flexion de telle sorte que les languettes fixement reliées au corps de base et les languettes reliées à la barre de flexion s'imbriquent les unes entre les autres à la manière d'un peigne, et en ce que les languettes de la première rangée qui sont reliées au corps de base fixe, et les languettes de la seconde rangée qui sont reliées à la barre de flexion, sont respectivement reliées par un élément en pont non soutenu, qui s'étend à une distance prédéterminable au-dessus des languettes intermédiaires.

3. Dispositif selon la revendication 1 ou 2, **caractérisé** en ce que la déformation de l'élément de rappel provoquée par l'action d'une force est mesurée au moyen de jauges extensométriques incorporées.

4. Dispositif selon l'une quelconque des revendications 1 à 3, **caractérisé** en ce que des plaques respectives, se faisant face, sont fixées sur les parties du dispositif fixement reliées au corps de base et sur les parties mobiles du dispositif, et elles forment un condensateur à plaques d'écartement variable, et en ce que la force agissante est mesurée en déterminant la modification de capacité.

5. Dispositif selon l'une quelconque des revendications 1 à 4, **caractérisé** en ce que le corps de base, l'élément de rappel et les languettes sont réalisés en silicium ou en un composé de silicium, et les ponts pour relier les languettes en un métal ou en silicium ou en un composé de silicium.

6. Dispositif selon l'une quelconque des revendications 1 à 5, **caractérisé** en ce que les éléments pour limiter la déflexion de la masse inerte sont incorporés de façon monolithique, conjointement avec les autres éléments du dispositif, dans le plan de traitement défini par les processus micromécaniques.

7. Procédé de fabrication d'un dispositif selon l'une quelconque des revendications 2 à 6, selon lequel, d'une manière en soi connu, les éléments mécaniques sont traités à l'aide de processus de gravage isotropes et anisotropes et d'étapes de lithographie, et les éléments électroniques pour l'enregistrement des valeurs de mesure à l'aide de processus de la micro-électronique, **caractérisé** en ce que les structures en pont non soutenues sont réalisées au moyen d'une métallisation locale d'or et d'une technique photorésist bicouche.

8. Procédé selon la revendication 7, **caractérisé** en qu'on fait appel aux étapes suivantes pour la réalisation des structures en pont :
- une couche de photorésist est appliquée sur la surface du dispositif de mesure d'accélération ;
- la couche de photorésist est enlevée dans les régions dans lesquel les les ponts doivent être fixement reliés à la surface ;
- une mince couche d'amorçage de métallisation est appliquée sur la surface du dispositif de mesure d'accélération ;
- la structure des éléments en pont est définie à l'aide d'une seconde couche de photorésist et d'une étape de lithographie ;
- la couche d'amorçage de métallisation est localement renforcée par métallisation ;
- la seconde couche de photorésist est enlevée ;
- la couche d'amorçage de métallisation est enlevée dans les régions non renforcées ;
- la première couche de photorésist est enlevée.
